# EUROPEAN PATENT APPLICATION

(11) **EP 1 395 034 A1**
(43) Date of publication of application: **03.03.2004**
(21) Application number: 03077595.1
(22) Date of filing: 18.08.2003
(51) Int. Cl.: H04N 1/00

(54) **System and method for generating an image fulfillment order**

(30) Priority: 29.08.2002 US 230917
(71) Applicant: EASTMAN KODAK COMPANY, Rochester, New York 14650 (US)
(72) Inventor: Berry, Michael J., Rochester, New York 14650-2201 (US); Minns, Tammy, Rochester, New York 14650-2201 (US)
(74) Representative: Haile, Helen Cynthia

(57) **Abstract**

A system and method of generating a fulfillment order using an imaging device having a display. The method comprises the steps of: accessing at least one digital image; displaying, on the display, the at least one digital image; providing selection means for selecting the at least one digital image; displaying, on the display, a fulfillment order menu responsive to the selecting of the at least one digital image while displaying at least a portion of the selected at least one digital image, the fulfillment order menu being associated with the selected at least one digital image and comprising members to modify the fulfillment order for the selected at least one digital image.

## Description

The invention relates generally to the field of imaging, and in particular to generating an image fulfillment order.

A common method of placing a photofinishing order is for a consumer to place their exposed film in an envelope and mark the appropriate boxes on the envelope to indicate the goods and/or services that they desire. The completed enveloped is then dropped at a retail location. The envelopes are picked up from the retail location and taken to a wholesale or other photofinishing laboratory where the order is processed.

With the introduction of digital imaging, a consumer can place an order using a digital image, hereinafter referred to as an image fulfillment order. Such an image fulfillment order can include, but is not limited to prints, photo CDs, picture disks, T-shirts with images, mugs with images, puzzles, and posters. In addition, the fulfillment order can include a request for the digital image to be stored on a medium such as a CD, floppy, or other digital media. Accordingly, an image fulfillment order can include an order for any good and/or service which relates to imaging.

As is well known, a digital image can be provided on a variety of media, such as on a computer disk, floppy disk, memory card, memory stick, or the like. For example, if the consumer uses a digital camera to capture an image, the consumer's image is in a digital format on a memory card. Alternatively, as well known to those skilled in the art, a hardcopy output print can be converted to digital form using a scanner.

Some digital cameras allow a user to use the digital camera's display to select which images to print and designate the number of copies to make. This information is then stored on the digital camera's memory card. One standard directed to this feature is known as DPOF (digital print order format). This feature is disclosed in EP 0860 980 A2 (Parulski et al) which is commonly assigned.

When placing an image order, the consumer may have images from a variety of sources, from hardcopy prints to digital images on memory cards or on CDs. In addition, the consumer may need to consider what order to place for each image, which may results in a large fulfillment order. Still further, the consumer may desire to edit/modify a particular image prior to placing an order for that image.

Accordingly, a need exists for a system and method for building an image fulfillment order. Such a system and method preferably permits the consumer to edit the image prior to placing the order, show the order as the order is built, and allow a non-serial workflow (i.e., any image can be selected at any time while placing the order). In addition, such a system and method should be suitable for batch printing, that is, printing after a complete order has been determined. Further, the method should be user friendly and suitable for use by a novice user.

An object of the present invention is to provide a system and method for generating an image fulfillment order.

Another object of the present invention is to provide such a system and method which can be used with an imaging device.

Still another object of the present invention is to provide such a system and method which permits the consumer to edit the image prior to placing the order, show the order as the order is built, and allow a non-serial workflow.

A further object of the present invention is to such a system and method which is user friendly and suitable for novice users.

These objects are given only by way of illustrative example, and such objects may be exemplary of one or more embodiments of the invention. Other desirable objectives and advantages inherently achieved by the disclosed invention may occur or become apparent to those skilled in the art. The invention is defined by the appended claims.

According to one aspect of the invention, there is provided a method of generating a fulfillment order using an imaging device having a display. The method comprises the steps of: accessing at least one digital image; displaying on the display the at least one digital image; providing selection means for selecting the at least one digital image; and displaying on the display a fulfillment order menu responsive to the selecting of the at least one digital image while displaying at least a portion of the selected at least one digital image, the fulfillment order menu being associated with the selected at least one digital image and comprising input means to generate the fulfillment order for the selected at least one digital image.

According to another aspect of the invention, there is provided a method of generating a fulfillment order using an imaging device having a display. The method comprises the steps of: accessing a plurality of digital images; displaying, on the display, the plurality of digital images; providing selection means for selecting one digital image from the plurality of digital images, the one digital image being displayed at a predetermined location on the display; and displaying, on the display, a fulfillment order menu responsive to the selecting of the one digital image while displaying at least a portion of the selected one digital image at the predetermined location, the fulfillment order menu being associated with the selected one digital image and comprising input means to generate the fulfillment order for the selected one digital image.

According to a further aspect of the invention, there is provided an imaging device for generating a fulfillment order. The device comprises: a display for displaying the at least one digital image; selection means for selecting the at least one digital image; and a fulfillment order menu displayed on the display responsive to the selecting of the at least one digital image while displaying the at least one digital image, the fulfillment order menu being associated with the selected at least one digital image, the fulfillment order menu comprising input means for modifying the fulfillment order menu to generate the fulfillment order for the at least one digital image.

According to yet a further aspect of the invention, there is provided an imaging device for generating a fulfillment order, comprising: a display for displaying a plurality of digital images, each of the plurality of digital images being disposed at a predetermined location on the display; selection means for selecting one of the plurality of digital images; and a fulfillment order menu displayed on the display responsive to the selecting of the one digital image, the fulfillment order being displayed while maintaining the display of the plurality of digital images at their respective predetermined locations, the fulfillment order menu being associated with the selected one digital image and comprising input means to modify the fulfillment order for the selected one digital image.

The foregoing and other objects, features, and advantages of the invention will be apparent from the following more particular description of the preferred embodiments of the invention, as illustrated in the accompanying drawings.

FIG. 1 shows an imaging device in accordance with the present invention.

FIG. 2 generally shows a diagram of included functions of the imaging device of FIG. 1.

FIG. 3 shows a communication network suitable for use with the present invention

FIG. 4 shows a display of the imaging device showing instructions for accessing an image using the imaging device.

FIG. 5 shows a display of the imaging device of the present invention displaying a plurality of images.

FIG. 6 shows the display of FIG. 5 showing a fulfillment order menu associated with one of the images.

FIG. 7 shows a flow diagram of a method in accordance with the present invention.

FIG. 8 shows the display of FIG. 5 showing a fulfillment order menu associated with another one of the images.

FIG. 9 shows the display of the imaging device of the present invention displaying a customization menu associated with the selected image of FIG. 8.

FIG. 10 shows the display of the imaging device illustrating fulfillment orders associated with the displayed images.

FIG. 11 shows the display of the imaging device illustrating a first embodiment of an order summary of the fulfillment order.

FIG. 12 shows the display of the imaging device illustrating a second embodiment of an order summary of the fulfillment order.

The following is a detailed description of the preferred embodiments of the invention, reference being made to the drawings in which the same reference numerals identify the same elements of structure in each of the several figures.

The present invention employs an imaging device having a display for displaying a digital image. For ease of convenience in describing the invention, the imaging device of the present invention will be disclosed as being a kiosk, such as a Picture Maker™ kiosk produced by Eastman Kodak Company. However, those skilled in the art will recognize that the system and method of the present invention can be employed with other imaging devices having a display for displaying a digital image, for example, including but not limited to, a digital camera, a film/digital hybrid camera, PDAs, mobile phones having image displays, minilabs, and a computer running imaging software.

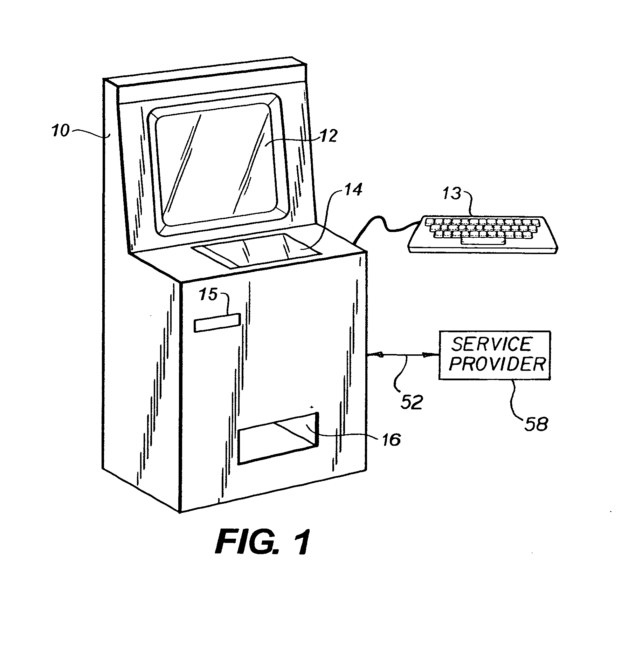

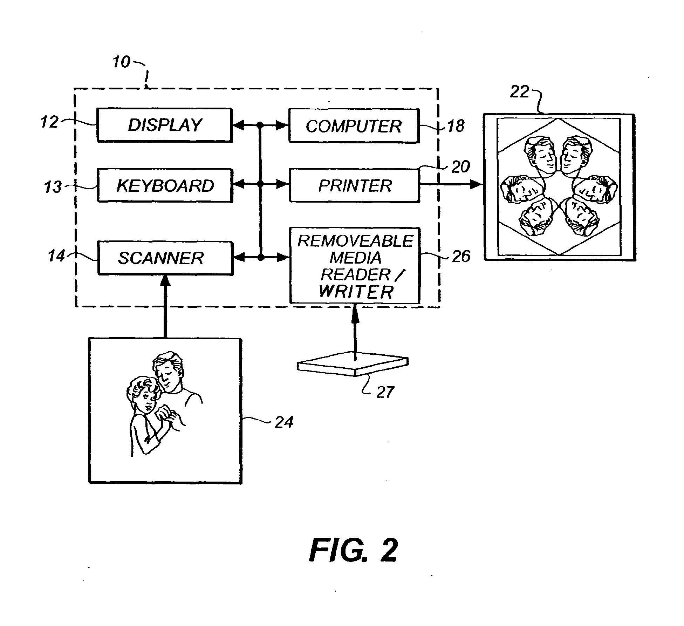

Referring now to Figures 1 and 2, an imaging device 10, configured as a kiosk, is generally illustrated in Figure 1. Imaging device 10 includes a color display 12 for presenting information to a user. Color display 12 can be a touchscreen display, whereby a user can provide information and data to imaging device 10, or a keyboard 13 may be employed to provide information and data. A scanner 14 can be provided for receiving a user-supplied visual image and converting the visual image into digital form. Alternatively, an input port 15 can be provided for receiving a user-supplied visual image in digital form, such as from a memory card, floppy disk, compact disc, PictureCD, or the like. Imaging device 10 can optionally include a delivery section 16 for controlling the delivery of a medium, for example, a hardcopy print. Delivery section 16 is illustrated in Figure 1 as an opening in imaging device 10.

Figure 2 generally shows a diagram of included functions of imaging device 10. As illustrated, imaging device 10 includes keyboard 13 for entering information/data into a computer 18. Computer 18 typically manages the flow of information and functionality of the components of imaging device 10. Imaging device 10 can optionally include a printer 20. Printer 20 responds to commands of computer 18 for forming an image on a medium such as thermal or ink-jet paper. An example of an output image is illustrated in Figure 2 at 22 which was formed from a user-supplied visual image 24. As described above, another method of receiving user-supplied visual image 24 is illustrated by a removable media reader/writer 26 for receiving removable media 27, for example, a memory card, floppy disk, compact disc, PictureCD, or other form of removable media used in transferring digital files, or for transferring (i.e., writing) a fulfillment order (alone or in combination with the corresponding digital image) to removable media 27, whereby the removable media 27 is delivered/transferred to the photofinishing laboratory for processing of the fulfillment order.

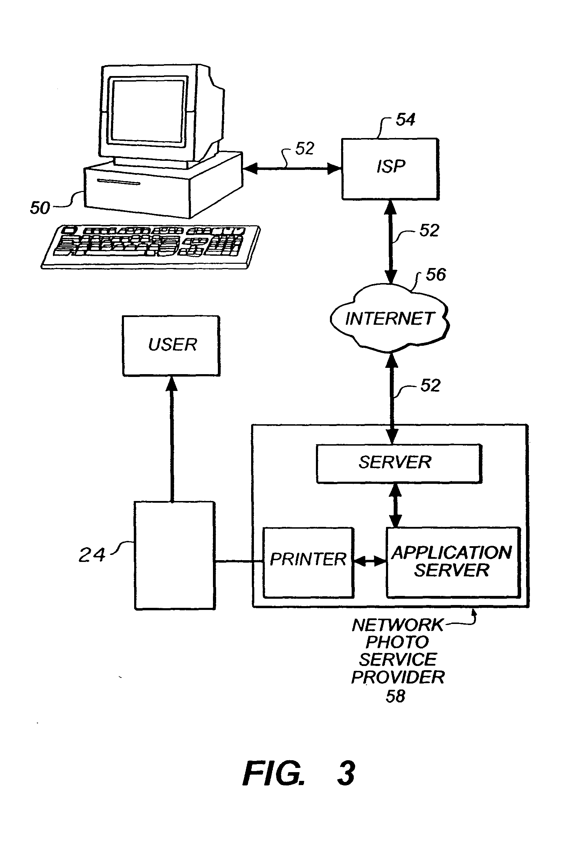

It may be desired to transmit a fulfillment order from imaging device 10 to a service provider from which the service provider can store, print, the digital image. For example, if a consumer's fulfillment order includes a request for prints and imaging device 10 does not include a printer, the digital image can be transmitted to a service provider for fulfilling the fulfillment order. Accordingly, a communications network, generally shown in Figure 1 at 52, provides a communication network for transmitting an image to a service provider 58. If imaging device 10 is a computer, such as a home or personal computer, a service provider can also be employed. For example, referring to Figure 3, when employing a service provider, a computer 50, can be used as imaging device 10 for viewing the user's image 24. Communication network 52 for transmitting image 24 can be by means of an internet service provider (ISP) 54 and the internet 56 to a service provider 58.

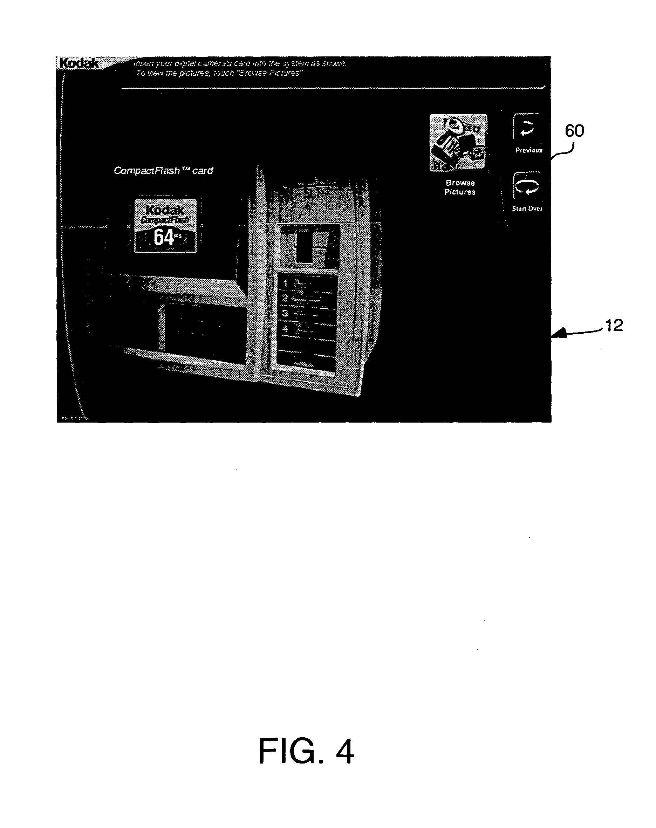

Using imaging device 10, at least one digital image is accessed and displayed on display 12. Access and display of the images is accomplished using methods known to those skilled in the art. For example, as discussed above, means for accessing the images can be accomplished by scanning a hardcopy print or employing input port 15 to receive removable media 27. If imaging device 10 is a digital camera, the captured image can be displayed upon capture. Display 12 can provide instructions to the user for accessing the digital image. For example, referring to Figure 4, a picture of a memory card is shown along with instructions to "Insert your digital camera card into the system as shown. To view the pictures, touch 'Browse Pictures'." Selection area 60 includes buttons for affecting access to the images, the buttons including "previous", "start over", and "browse pictures".

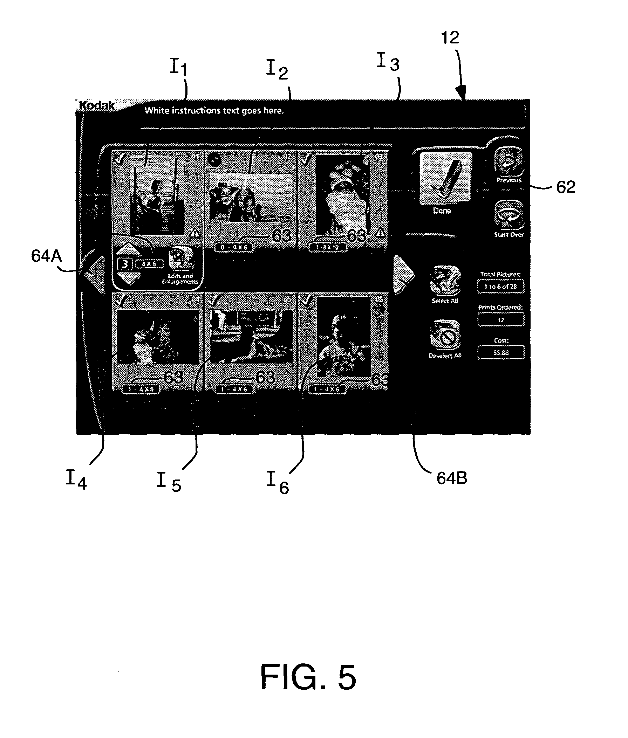

When the desired images have been accessed, a predetermined number of the images is displayed on display 12. Referring to Figure 5, six images I1-I6 have been accessed and displayed on display 12. The number of the image is optionally noted proximate each image, as shown in Figure 5. It is understood that more or fewer images can be accessed and displayed; six images are shown for illustrative purposes only. It is preferred that the displayed images do not overlap. It is understood that more images may have been accessed than can be displayed on display 12. For example, 25 images may have been accessed. In such a situation, image device 10 can include selection means to display those accessed images. In Figure 5, selection means 64A and 64B are shown as arrows, which when selected, display another grouping of the accessed images. Other selection means are well known to those skilled in the art, including but not limited to, buttons, touchscreen, wands, pens, cursor, mouse click, trackball, keypad, keyboard.

Preferably, the images displayed on display 12 are a thumbnail size image so that the images are quickly accessed for viewing. Low-resolution "thumbnail" size image, can be created as described in commonly-assigned U.S. Patent No. 5,164,831 (*Kuchta*). In Figure 5, selection means 64A displays a predetermined number of previous thumbnail images while selection member 64B displays a predetermined number of next thumbnail images.

Selection means 62 are employed for selecting at least one of the displayed images. Selection means 62 can include icons, members, buttons, touchscreen, wand, keypad, keyboard and the like well known to those skilled in the art. In Figure 5, selection means 62 can be a touchscreen wherein the image is touched, or the icon shown as "previous", "done", "start over" can be touched to navigate among the displayed images to select the desired image. For example, a highlighted box or color indicator can be used to navigate among the displayed images so as to indicate which image is the desired image for selection.

Examples of selection means 62 shown in Figure 5 also include a "select all" icon for selecting all the displayed images and "deselect all" icon for deselecting all the displayed images. In a preferred embodiment, all images are defaulted to a "not selected" mode upon display on display 12.

If the "select all" icon is selected, a default fulfillment order can be associated with all the images. For example, upon selection of "select all", the fulfillment order will include one 4x6 format print of each accessed image. Similarly, if the "deselect all" icon is selected, the fulfillment order for each image will be configured to "zero" (i.e., no order).

A fulfillment order is associated with each displayed image. Preferably, the fulfillment order associated with each displayed image is displayed proximate the image. In a preferred embodiment, each image includes a fulfillment display 63 which displays the fulfillment order for the particular image. In Figure 5, each fulfillment display 63 is shown as having a rectangular shape. It is understood that fulfillment display 63 may comprise other shapes/sizes.

A default fulfillment order can be associated with each displayed image, such as, no order (i.e., there is no order for any of the displayed images until the user acts, similar to "deselect all") or one 4x6 print (similar to "select all"). For example, referring to Figure 5, image I2 has no order associated with the image (i.e., 0-4x6) while image I4 has an order of one 4x6 prints associated with the image (i.e., 1-4x6) and image I3 has an order of one 8x19 associated with the image (i.e., 1-8x10).

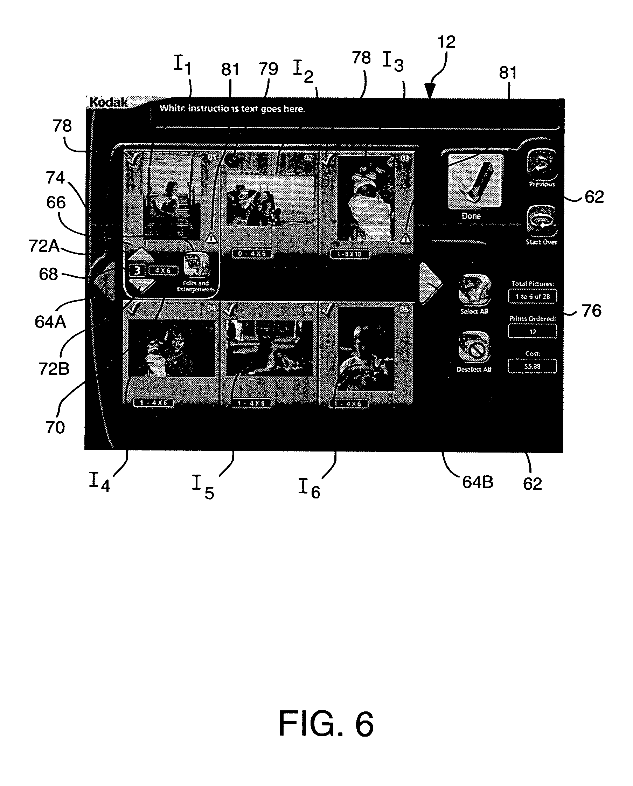

To modify the fulfillment order associated with a displayed image (i.e., change 0-4x6 to 3-8x10 or change 1-4x6 to 0-4x6) the desired image is selected. For example, referring again to Figure 5, image I1 has been selected as indicated by a highlighted box outlining image I1. In response to the selection of the displayed image I1, a fulfillment order menu is displayed, as shown in Figure 6. The fulfillment order menu can be completed to generate a fulfillment order associated with the selected image. For example, referring still to Figure 6 and image I1, a fulfillment order menu 66 is displayed proximate image I1. Accordingly, with one selection (i.e., the selection of an image), an order menu is directly displayed. That is, with just one "button press", an order menu is generated.

When fulfillment order menu 66 is displayed, the image associated with the displayed fulfillment order menu does not substantially change or alter its position/location on display 12. That is, the selected image is located at a predetermined location on display 12. When menu 66 appears on display 12, the remainder of the display is not changed. That is, the selected image remains located and displayed at the predetermined location on display 12. For example, referring to Figures 5 and 6, image I1 did not change size, position, or location when menu 66 was displayed. Menu 66 is displayed so as to not obscure or overlap its associated image. Stated alternatively, menu 66 associated with the selected image "pops up" in response to the selection of the image; the selected image remains at the predetermined location and menu 66 does not cover the selected image.

Preferably, the entire selected image is displayed when menu 66 "pops up". However, it is understood that only a portion of the selected image (e.g., a top portion or a bottom portion) could be displayed. For example, if menu 66 overlaps/obscures a portion of the selected image, then only a portion of the selected image will be displayed.

In a preferred embodiment, menu 66 also does not cover, obscure, or overlap any other image displayed on display 12. In Figure 6, images I1-I6 are arranged such that menu 66 is displayed so as to be spaced from each other. Accordingly, when menu 66 is displayed, menu 66 is displayed within the spaces disposed between the displayed images. As such, none of the displayed images are covered when menu 66 is displayed on display 12 for any of the displayed images.

Selecting another image will close menu 66 for the previously selected image. For example, to hide menu 66 for image I1, the user can select image I2. When image I2 is selected, menu 66 associated with image I2 is displayed and menu 66 associated with image I1 closes.

In a preferred embodiment, when display 12 displays the predetermined number of images, menu 66 is displayed for one of the images, such as image I1, to assist the novice or first time user in understanding how to place a fulfillment order.

Input means known to those skilled in the art are used to modify the fulfillment order menu. Referring still to Figure 6, menu 66 includes input means for modifying/placing a fulfillment order, including a number box 68, a format box 70, arrows 72A, 72B, and an editing member 74. Number box 68 displays a number associated with how many prints of the image are desired. Format box 70 disposed proximate number box 68 displays the format/size associated with the print. For image I1 of Figure 6, number box 68 shows a "3" while format box 70 shows a "4x6" indicating that the user is placing an order for three 4x6 hardcopy prints. Format box 70 can be modified to reference another format size, such as "3x5" or "5x7". Two arrows 72A, 72B are disposed proximate number box 68, and can be used to modify the number of hardcopy output prints of the fulfillment order.

Editing member 74, which will be discussed in further detail below, provides a customization menu to further fulfillment order options.

When a fulfillment order has been associated with an image, a mark or other indicator can optionally be shown to provide a notice to the user. In Figure 6, a mark 78 is shown on images I1, I3-I6 as a check mark.

If no fulfillment order has been associated with an image, another mark or indicator can optionally be shown to provide such a notice. In Figure 6, a mark 79 is shown on image I2 as a zero with a slash through it.

If the image quality of a requested print order is believed to be of a low quality resolution, a mark or other indicator can optionally be shown to provide a notice to the user. In Figure 6, a mark 81 is shown proximate images I1 and I3 as a exclamation point, warning the user of potential unacceptable image quality of the print. For example, an unacceptable image quality output could result from an enlargement of a low-resolution image.

Display 12 includes a total order area 76 wherein information relating to the total fulfillment order is provided to the user. For the fulfillment order shown in Figure 6, 28 images have been accessed, of which six images are displayed in display 12, and the fulfillment order comprises 12 prints for a total dollar amount of $5.88. Total order area 76 is preferably updated with the modification of each menu 66.

When the fulfillment order is complete, the user can indicate the completion of the order by means known to those skilled in the art. For Figure 6, the "done" icon of selection means 62 can be selected.

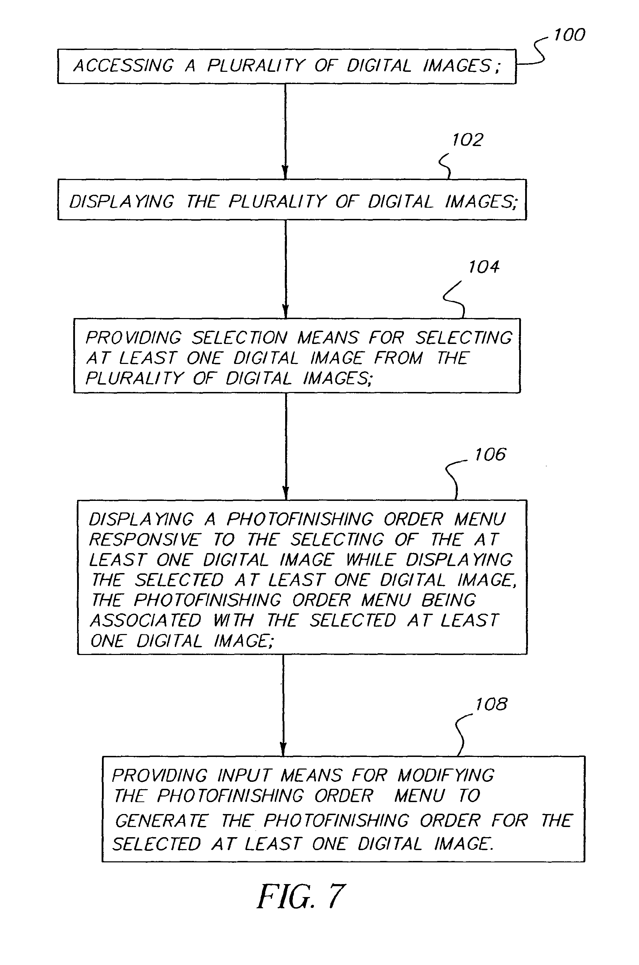

Figure 7 provides a flow diagram of the method in accordance with the present invention. A plurality of digital images is accessed (step 100) and displayed (step 102). At step 104, selection means are provided for selecting at least one digital image from the plurality of digital images. A fulfillment order menu is displayed responsive to the selecting of the at least one digital image while displaying the selected at least one digital image (step 106). The fulfillment order menu is associated with the selected at least one digital image. Input means are provided for modifying the fulfillment order menu to generate the fulfillment order for the selected at least one digital image (step 108).

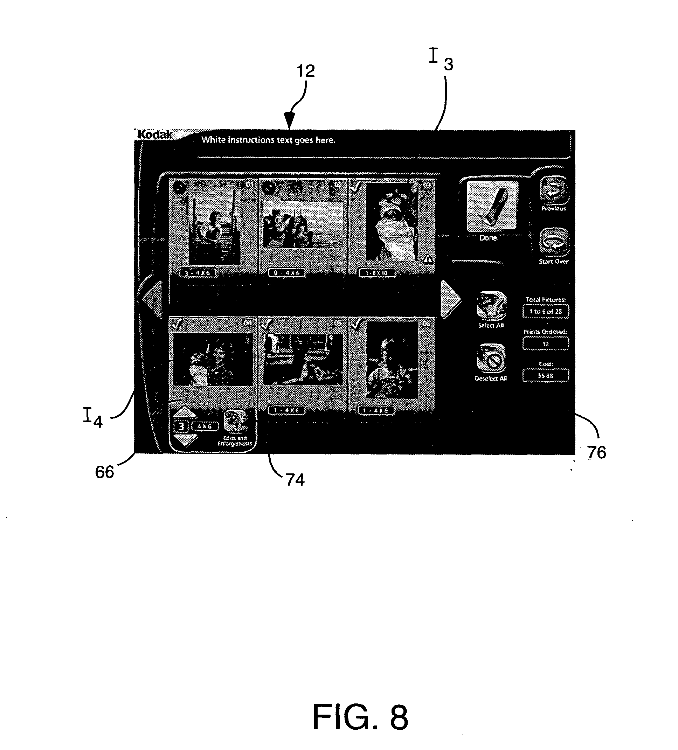

Figure 8 shows another example of the present invention wherein image I4 shown on display 12 has been selected to generate a fulfillment order. As shown in Figure 8, when image I4 is selected, menu 66 associated with image I4 "pops up" for display on display 12 simultaneous with the display of selected image I4. The location of image I4 does not alter when menu 66 is displayed nor is image I4 covered or obscured by menu 66.

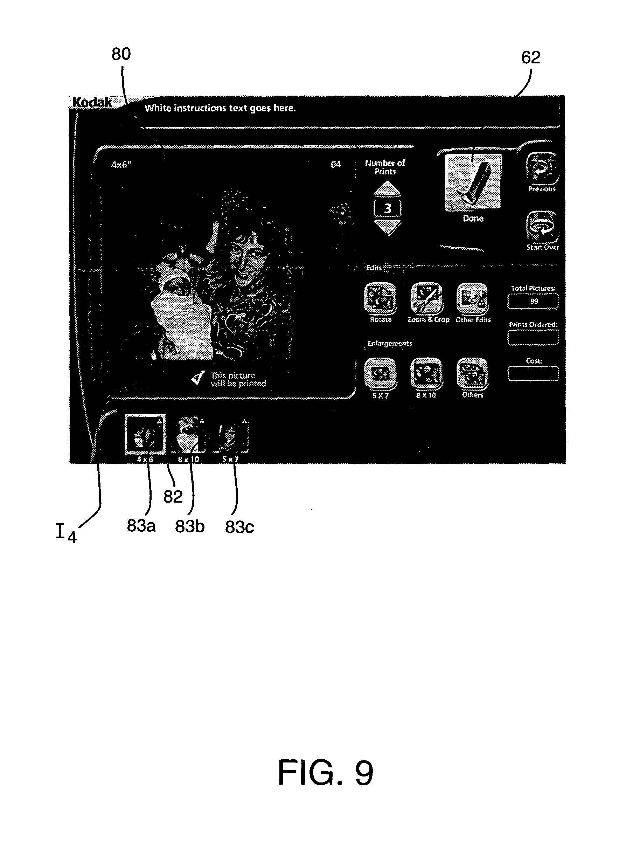

If a fulfillment order other than a 4x6 print is desired, the user can select editing member 74 for additional edits and enlargements. When editing member 74 is selected, display 12 displays a customization menu 80, as shown in Figure 9. That is, when editing member 74 is selected, customization menu 80 is displayed wherein the selected image is presented for customization of the fulfillment order.

Referring still to Figure 9, customization menu 80 allows an image to be customized to generate a modified image. For example, the image can be rotated, zoomed, and cropped by means known to those skilled in the art to generate a modified image. More edits can be applied to customize the selected image, such as color balance, color brightness, and black and white. Input means are provided to accomplish customization of the selected image.

Once a modified image has been generated, a fulfillment order can be associated with that modified image. For example, for image I4 shown in Figure 9, three modified images have been generated as shown by the three images located in modified image area 82. Specifically, from image I4, a first modified image 83a is generated by zooming/cropping image I4 to focus on the mother and baby; a second modified image 82b is generated by zooming/cropping image I4 to focus solely on the baby; and a third modified image 83c is generated by zooming/cropping image I4 to focus solely on the mother.

For each modified image, a fulfillment order can be placed. The fulfillment order can include enlargements, for example, format sizes 5x7, 8x10 and the like or include other photofinishing goods or services, including a poster, mug, tee-shirt, and CD. For Figure 9, the fulfillment order being built includes a 4x6 of first modified image 83a, an 8x10 of second modified image 83b, and a 5x7 of third modified image 83c.

When the fulfillment order is complete, selection means 62 is selected to indicate completion. For Figure 9, selection means 62 includes a "save" button to indicate completion. Upon selecting selection means 62, the user is returned to the screen of display 12 shown in Figure 8 (i.e., the previously viewed screen). Preferably, total order area 76 shown in Figure 8 is updated accordingly.

The modified images 83a, 83b, 83c generated using customization screen 80 (i.e., the images displayed in modified image area 82) can also be displayed in display 12 alongside the accessed images to fully illustrate to the user the fulfillment order which is being generated. For example, second modified image 83b (shown in Figure 9 in modified image area 82) which was generated using customization menu 80 is shown as image I3 in Figure 8. Accordingly, the present invention provides the user with a visualization of the fulfillment order as the fulfillment order is developed.

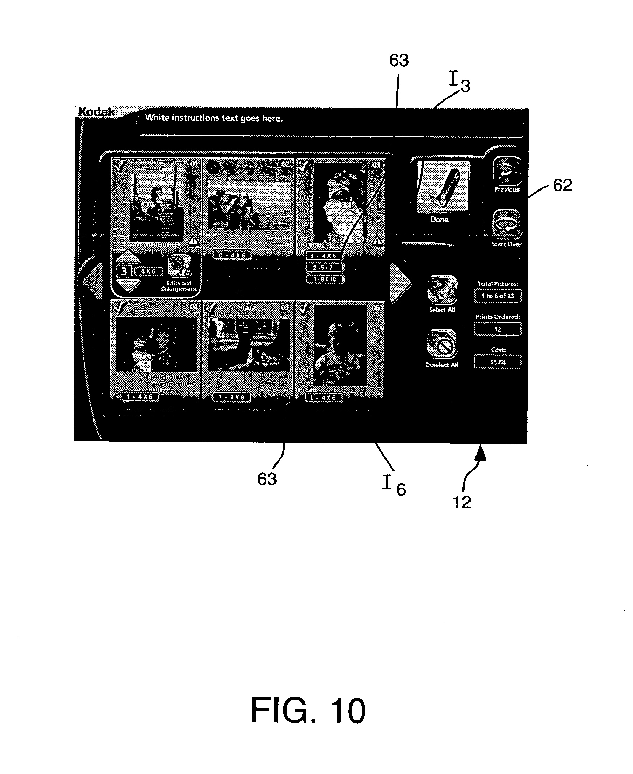

If the fulfillment order comprises prints of more than one format size, this can be reflected accordingly in display 12. For example, for illustrative purposes, Figure 10 illustrates that the fulfillment order of image I3 comprises three formats - 1-4x6, 1-5x7, and 1-8x10. Alternatively, only a portion of the total fulfillment order for a particular image can be displayed in fulfillment display 63. This might be preferred if viewing space on the display is limited. For example, for illustrative purposes, referring to Figure 10, the fulfillment order associated with image I6 may include one 4x6 print and one 8x10 print, yet fulfillment display 63 of image I6 shown in Figure 10 (as illustrated) may only show the number of 4x6 prints being ordered. Accordingly, the entire fulfillment order for the particular image would be obtained by selecting the image and viewing the associate fulfillment order menu 66.

Instructional text or audio information can be used to assist the user in generating a fulfillment order.

The fulfillment order can be previewed prior to requesting the placement of the order. The user navigates to a preview order menu by indicating completion by selecting selection means 62, shown in Figure 10 as the "done" button.

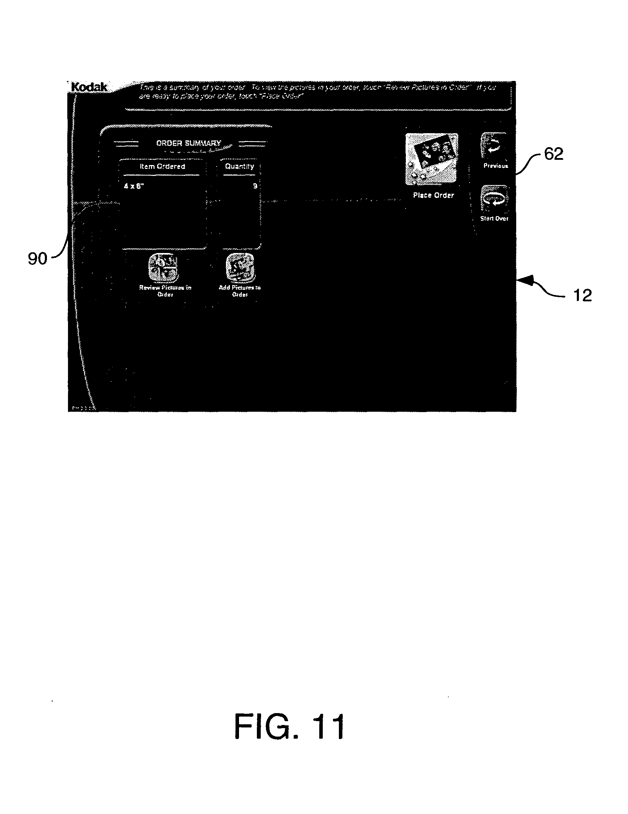

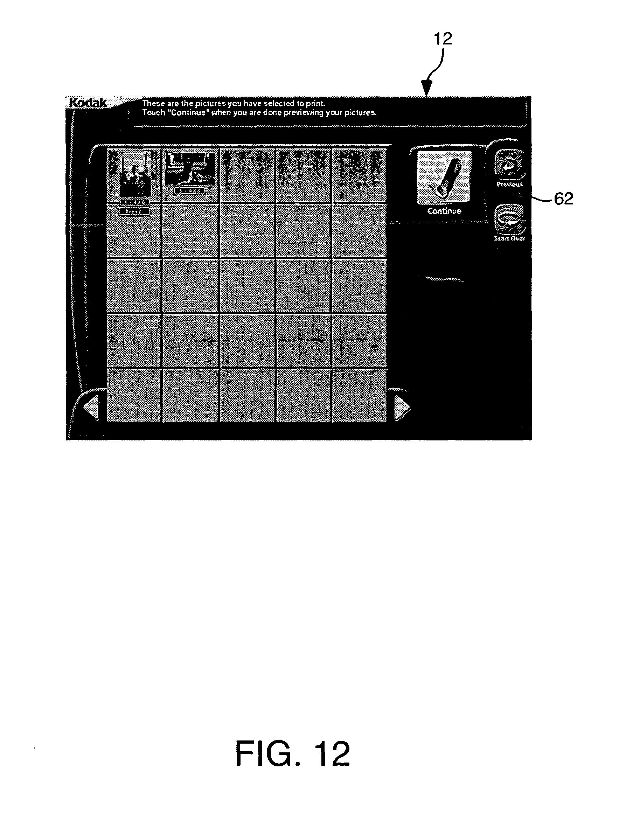

The preview order menu provides an order summary. Figure 11 shows display 12 illustrating one embodiment of a preview order menu 90 wherein the order summary is arranged by format size. (It is understood that preview order menu 90 shown in Figure 11 does not accurately reflect the fulfillment order generated in Figures 5-6, and 8-10.) Figure 12 shows display 12 illustrating a second embodiment of preview order menu 90 wherein the order summary is arranged for each image. Those skilled in the art will recognize that other arrangements for an order summary are known.

To place the order, selection means 62 is selected. In Figure 11, selection means 62 includes a "place order" button which indicates acceptance of the order.

The fulfillment order (the order information alone, the images alone, or the combination of the order information and the associated image(s)) can be transmitted over the communication network to a service provider for processing, or alternatively, written to a CD or other removable media for physical transport to a service provider. Still further, if imaging device 10 includes a printer, the order can be fulfilled by imaging device 10.

The present invention provides a system and method of building a fulfillment order in a non-serial workflow. That is, any image can be accessed at any time during the generation of the fulfillment order. For example, images can be skipped, and images can be cropped, zoomed, color balanced. The system and method of the present invention allows the user to change the order at any time until the final "order complete" acceptance is selected.

The fulfillment order is accomplished with a minimal number of button presses, thereby allowing the user to quickly build the fulfillment order.

The present invention preferably supports DPOF. That is, if a DPOF fulfillment order was associated with a particular image prior to the image being accessed/displayed by imaging device 10, it is preferred that imaging device 10 retains the DPOF fulfillment order and queries the user as to how to proceed with the DPOF fulfillment order. For example, imaging device 10 can display the DPOF fulfillment order proximate the image. Alternatively, imaging device 10 can query the user to determine if the user wants to by-pass or re-set the DPOF fulfillment order. Still further, the imaging device 10 can automatically incorporate the DPOF fulfillment order with the user's fulfillment order being generated using imaging device 10 such that the DPOF fulfillment order is displayed to the user (i.e., the DPOF fulfillment order is the default). Those skilled in the art will recognize other methods of addressing the support of DPOF.

## Claims

1. A method of generating a fulfillment order using an imaging device having a display, comprising the steps of:
accessing at least one digital image;
displaying, on the display, the at least one digital image;
providing selection means for selecting the at least one digital image; and
displaying, on the display, a fulfillment order menu responsive to the selecting of the at least one digital image while displaying at least a portion of the selected at least one digital image, the fulfillment order menu being associated with the selected at least one digital image and comprising input means to generate the fulfillment order for the selected at least one digital image.

2. The method of Claim 1, further comprising the step of displaying a customization menu in response to selecting the input means.

3. The method of Claim 2, further comprising second input means for modifying the customization menu.

4. The method of Claim 1, further comprising the step of displaying a fulfillment display proximate the at least one digital image comprising at least a portion of the fulfillment order associated with the at least one digital image.

5. A method of generating a fulfillment order using an imaging device having a display, comprising the steps of:
accessing a plurality of digital images;
displaying, on the display, the plurality of digital images;
providing selection means for selecting one digital image from the plurality of digital images, the one digital image being displayed at a predetermined location on the display; and
displaying, on the display, a fulfillment order menu responsive to the selecting of the one digital image while displaying at least a portion of the selected one digital image at the predetermined location, the fulfillment order menu being associated with the selected one digital image and comprising input means to generate the fulfillment order for the selected one digital image.

6. An imaging device for generating a fulfillment order, comprising:
a display for displaying the at least one digital image;
selection means for selecting the at least one digital image; and
a fulfillment order menu displayed on the display responsive to the selecting of the at least one digital image while displaying the at least one digital image, the fulfillment order menu being associated with the selected at least one digital image, the fulfillment order menu comprising input means for modifying the fulfillment order menu to generate the fulfillment order for the at least one digital image.

7. The imaging device of Claim 6, further comprising a customization menu displayed on the display in response to selecting the input means.

8. An imaging device for generating a fulfillment order, comprising:
a display for displaying a plurality of digital images, each of the plurality of digital images being disposed at a predetermined location on the display;
selection means for selecting one of the plurality of digital images; and
a fulfillment order menu displayed on the display responsive to the selecting of the one digital image, the fulfillment order being displayed while maintaining the display of the plurality of digital images at their respective predetermined locations, the fulfillment order menu being associated with the selected one digital image and comprising input means to modify the fulfillment order for the selected one digital image.

9. The imaging device of Claim 8, further comprising a customization menu displayed on the display in response to selecting the input means.

10. The imaging device of Claim 8, further comprising a fulfillment display associated with each of the plurality of digital images, each fulfillment display being displayed on the display proximate their associated digital image, each fulfillment display comprising a portion of the fulfillment order.
